# FASCICULE DE BREVET EUROPEEN

(11) **EP 0 656 610 B1**
(45) Date de publication et mention de la délivrance du brevet: **18.03.1998**
(21) Numéro de dépôt: 94402744.0
(22) Date de dépôt: 30.11.1994
(51) Int. Cl.: G07B 17/04

(54) **Dispositif de protection thermique pour appareil électronique sécurisé, notamment machine à affranchir**
Thermische Schutzvorrichtung für einen gesicherten elektronischen Apparat, insbesondere eine Frankiermaschine
Thermal protection device for a secured electronic apparatus, especially a franking machine

(30) Priorité: 01.12.1993 FR 9314381
(43) Date de publication de la demande: 07.06.1995
(73) Titulaire: NEOPOST INDUSTRIE, F-92220 Bagneux (FR)
(72) Inventeur: Vermesse, Bernard, F-94240 L'Hay Les Roses (FR)
(74) Mandataire: Joly, Jean-Jacques

(56) Documents cités:
- EP-A- 0 165 731
- FR-A- 2 675 965
- US-A- 4 035 756

## Description

L'invention concerne la protection des appareils électroniques à l'encontre des températures excessives, hautes ou basses, qu'ils peuvent subir durant leur fonctionnement ou même - et surtout - en dehors des périodes de fonctionnement.

La présente invention s'applique très avantageusement aux appareils électroniques sécurisés, notamment les machines à affranchir, qui contiennent des informations de comptabilisation représentatives de valeurs monétaires (les montants des affranchissements dans le cas d'une machine à affranchir), conservées en mémoire dans l'appareil et devant être protégées contre toute altération, frauduleuse ou accidentelle, du fait de températures dépassant, dans un sens ou dans l'autre, la plage à l'intérieur de laquelle est garantie une rétention correcte des informations dans la mémoire électronique de l'appareil.

Dans une machine à affranchir, aussi bien l'unité de comptabilisation (qui est réalisée autour d'une mémoire électronique) que le mécanisme d'actionnement de l'impression sont enfermés dans une enceinte protégée dont l'accès est limité aux employés de l'administration postale ou à ceux du service après-vente du constructeur, cette protection étant par exemple réalisée par un plombage approprié.

Le EP-A-0 099 571 décrit un tel appareil électronique comportant une enceinte protégée à l'encontre des tentatives de manipulation et des perturbations électromagnétiques qui pourraient être appliquées intentionnellement ou accidentellement aux circuits de l'appareil et susceptibles d'altérer le contenu de la mémoire de comptabilisation. n est prévu une trappe d'accès à cette enceinte, configurée de telle manière que son ouverture empêche sa réutilisation en tant que porte, des moyens étant en outre prévus pour que l'ouverture de cette trappe invalide tout fonctionnement ultérieur de l'appareil.

Une machine à affranchir ainsi constituée est donc protégée à l'encontre de fraudes par manipulations mécaniques ou par application d'un champ électromagnétique qui pourrait, par exemple, permettre d'effacer le contenu de la mémoire de comptabilisation.

Un autre type de fraude consiste à porter la machine à une température sortant de la plage de températures de fonctionnement pour laquelle elle est spécifiée.

Par exemple, si l'usager malveillant place la machine dans un four ou dans un congélateur, il peut aisément atteindre des températures extrêmes susceptibles d'effacer la mémoire de comptabilisation, sans pour autant altérer physiquement le circuit de la machine.

Pour empêcher une telle " fraude thermique" il est nécessaire de détecter toute tentative de sortie de la plage de température spécifiée (et ce, même en dehors des périodes normales d'utilisation de l'appareil, c'est-à-dire que la fraude doit pouvoir être détectée même si la machine est éteinte ou débranchée), mémoriser ce franchissement et interdire toute utilisation ultérieure de l'appareil.

La détection des tentatives de fraude par échauffement de l'appareil est relativement simple à mettre en oeuvre, par exemple par une technique bien connue consistant à placer un fusible thermique en série dans l'alimentation électrique de la machine, le fusible étant bien entendu situé dans l'enceinte plombée. Si le fusible est, par exemple, calibré à 70°C, il se coupe dès que la température interne de la machine dépasse cette valeur, la machine devenant alors inutilisable. Pour permettre un nouveau fonctionnement, il est nécessaire de déplomber la machine et changer le fusible.

La détection irréversible des basses températures est plus difficile.

Une technique a été proposée par le FR-A-2 675 965, consistant à prévoir un thermostat à réarmement manuel sensible aux températures négatives, ce composant étant bien entendu placé à l'intérieur de l'enceinte plombée. Plus précisément, le composant comporte deux organes thermosensibles à disque bimétallique qui commandent des contacts électriques montés en série, de manière à couper l'alimentation de la machine lorsque la température sort de la plage de fonctionnement normal et à interdire le fonctionnement de cette dernière même lorsque la température retourne dans cette plage.

Le composant protecteur proposé par ce brevet est cependant un composant spécifique, donc coûteux à industrialiser et à produire. En outre ce mode de protection, purement électromécanique, n'offre aucune possibilité de réglage et sa précision ne dépend en fait que de la qualité de fabrication et de calibrage des disques bimétalliques, grevant ainsi d'autant plus son coût que l'on recherche une précision, une fiabilité et une sécurité de fonctionnement élevées.

Le but de l'invention est de proposer un dispositif de protection à l'encontre des fraudes thermiques (températures froides et/ou chaudes) qui soit facilement industrialisable à partir de composants électroniques du commerce, donc de faible coût, tout en présentant une précision, une fiabilité et une sécurité de fonctionnement très grandes.

On verra également que, dans l'un des modes de réalisation proposé, le seuil de température froide et/ou chaude de déclenchement du dispositif peut être très aisément réglé, sans grever notablement le coût d'ensemble du dispositif.

Un autre but de l'invention est de proposer un dispositif de surveillance de la température de fonctionnement de la machine, qu'il s'agisse d'une valeur absolue de température ou d'une valeur différentielle, c'est-à-dire d'un échauffement par rapport à la température ambiante. En effet, il est bien connu qu'un échauffement excessif d'une machine présente un caractère anormal et constitue généralement un signe précurseur de la survenance d'une panne à bref délai. On verra que le dispositif de l'invention permet de détecter des échauffements excessifs et de provoquer une action appropriée, par exemple l'affichage d'un message, un arrêt temporaire, une diminution de cadence, etc.

L'invention n'est donc pas limitée aux domaines de la détection des fraudes, mais s'applique également à celui, plus général, de la surveillance des températures et des échauffements d'une machine.

Pour atteindre ces divers buts, l'invention propose un dispositif du type générique décrit dans le FR-A-2 675 965 précité, c'est-à-dire un dispositif pour détecter le franchissement d'un seuil prédéterminé de température par les circuits d'un appareil électronique sécurisé, notamment ceux d'une machine à affranchir, et interdire l'utilisation ultérieure de cet appareil après un tel franchissement, ce dispositif comportant, disposés à l'intérieur d'une enceinte protégée : un organe détecteur de température, propre à passer de manière non réversible, lors d'un franchissement dudit seuil prédéterminé, d'un premier état stable à un second état stable et délivrant un signal d'alerte lorsqu'il se trouve dans ce second état ; et des moyens de commande, coopérant avec le détecteur pour délivrer, en réponse au signal d'alerte, un signal d'inhibition propre à interdire toute utilisation de l'appareil électronique.

Selon l'invention, l'organe détecteur de température est un organe électrique comportant : une source de tension, délivrant une tension continue ; un composant électrique ou électronique susceptible de prendre deux états correspondant auxdits premier et second états stables ; et un interrupteur thermostatique fermant, pour des valeurs de températures situées au-delà dudit seuil prédéterminé, un circuit comprenant la source de tension et le composant électrique ou électronique de manière que le passage d'un courant dans l'interrupteur thermostatique provoque une transition du premier au second état du composant électrique ou électronique.

L'organe détecteur de température peut très avantageusement être un détecteur de températures basses, l'interrupteur thermostatique fermant le circuit pour des valeurs de températures inférieures audit seuil.

Le composant électrique ou électronique peut être un fusible monté dans une maille de courant comprenant également la source de tension et l'interrupteur thermostatique, le signal d'alerte étant alors notamment donné par la tension prélevée au point commun du fusible et de l'interrupteur thermostatique.

En variante, le composant électrique ou électronique peut être un bistable RS dont l'entrée de déclenchement est reliée à l'interrupteur thermostatique.

Dans une première forme de mise en oeuvre, le signal d'inhibition délivré par les moyens de commande est appliqué à une entrée d'un microcontrôleur de pilotage de l'appareil électronique et ce microcontrôleur se place, en présence du signal d'inhibition, dans un mode interdisant toute utilisation de l'appareil électronique. Dans ce cas, avantageusement, le signal d'inhibition, lorsqu'il est délivré, possède un niveau variable représentatif de la tension délivrée par la source de tension de l'organe détecteur de température, ce signal est appliqué sur une entrée analogique du microcontrôleur et ce dernier, en cas de tension inférieure à une valeur limite donnée, délivre un message d'avertissement de changement de pile et/ou se place dans un mode interdisant toute utilisation de l'appareil électronique.

Dans une seconde forme de mise en oeuvre, le signal d'inhibition délivré par les moyens de commande est appliqué à une entrée d'un circuit superviseur du circuit d'alimentation de l'appareil électronique et ce circuit superviseur, en présence du signal d'inhibition, met hors service l'alimentation de l'appareil électronique.

Lorsqu'il s'agit de détecter le franchissement par l'appareil aussi bien d'un seuil inférieur de température que d'un seuil supérieur de température afin de signaler toute excursion de température hors des limites d'une plage de températures admissibles, il est avantageusement prévu un organe détecteur de température commun délivrant un signal d'alerte commun, cet organe détecteur de température comportant deux interrupteurs thermostatiques montés en parallèle, l'un fermant le circuit pour des valeurs de températures inférieures audit seuil inférieur et l'autre fermant le circuit pour des valeurs de températures supérieures audit seuil supérieur. En variante, il peut aussi être prévu deux organes détecteurs de température distincts, réglés sur chacun des seuils respectifs et délivrant deux signaux d'alerte distincts correspondants.

L'interrupteur thermostatique peut être un thermocontact bimétallique. Il peut également être, en variante, un circuit électronique commandé par thermistance ou thermocouple.

Dans ce dernier cas, il est avantageusement prévu un interrupteur thermostatique auxiliaire non électronique se fermant à une température voisine dudit seuil prédéterminé mais située en-deçà de celui-ci, monté en série avec ledit circuit électronique commandé par thermistance ou thermocouple pour n'alimenter celui-ci que lorsque la température approche ledit seuil prédéterminé.

Toujours dans ce dernier cas, et notamment pour la prévention d'échauffements excessifs de l'appareil électronique en cours d'utilisation de celui-ci, le circuit électronique commandé par thermistance ou thermocouple peut avantageusement délivrer également un signal représentatif de la température opérationnelle de l'appareil électronique, ce signal étant appliqué à une entrée analogique d'un microcontrôleur de pilotage de l'appareil électronique et ce dernier, en cas de température opérationnelle supérieure à une température de référence, délivrant un message d'avertissement et/ou se plaçant dans un mode interdisant temporairement toute utilisation de l'appareil électronique. La température de référence peut d'ailleurs être un paramètre variable, fonction de la température de l'environnement de l'appareil électronique, de manière à ne commander le microcontrôleur que lorsque l'écart différentiel entre température de l'environnement et température opérationnelle dépasse une valeur limite prédéterminée.

D'autres caractéristiques et avantages de l'invention apparaîtront à la lecture de la description détaillée ci-dessous de diverses formes de réalisation, données à titre d'exemple d'application des enseignements de l'invention, et en référence aux figures annexées.
La figure 1 est une vue générale sous forme de schéma par blocs d'une machine à affranchir, avec notamment son circuit d'alimentation, incorporant un dispositif de protection selon l'invention.
La figure 2 est une vue du circuit de protection de l'invention, dans une première forme de réalisation,
La figure 3 est homologue de la figure 2, pour une variante de cette première forme de cette réalisation,
La figure 4 illustre une autre variante du premier mode de réalisation. La figure 5 illustre l'interrupteur thermostatique utilisé dans une seconde forme de réalisation de l'invention.
La figure 6 illustre le schéma électrique équivalent du circuit électronique de la figure 5.
La figure 7 illustre le circuit de protection de l'invention selon le second mode de réalisation, utilisant le circuit de la figure 5.
La figure 8 illustre une variante perfectionnée du dispositif de la figure 7.

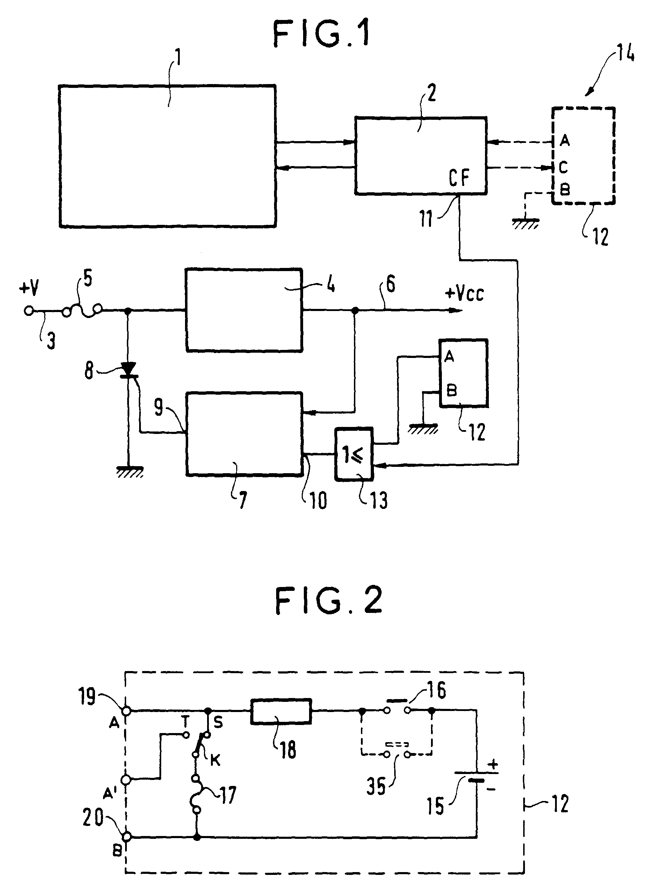

Sur la figure 1, la référence 1 désigne les divers circuits électromécaniques de la machine à affranchir, qui ne seront pas décrits en détail dans la mesure ou ils sont bien connus de la technique et ne sont pas modifiés pour mettre en oeuvre l'invention. La référence 2 désigne le microcontrôleur de commande des circuits 1, qui est associé à diverses mémoires (situées dans le bloc 1), notamment une mémoire contenant les compteurs totalisateurs des affranchissements réalisés, dont le contenu doit être protégé à l'encontre de toute altération (notamment effacement) accidentelle ou frauduleuse.

Les circuits 1 et 2 sont alimentés par une tension V_{cc} stabilisée et régulée, produite à partir d'une tension V redressée et filtrée appliquée en 3, par l'intermédiaire d'un régulateur 4 produisant la tension V_{cc} (généralement + 5 V) nécessaire au fonctionnement des divers circuits intégrés de la machine. Il est prévu en entrée un fusible 5 de protection tel que, si la tension délivrée en 6 par le régulateur 4 dépasse une limite haute détectée par un circuit superviseur 7 (par exemple un circuit du type *MC 3423*), ce dernier commande une sortie 9 de commande d'un thyristor 8 monté entre la borne aval du fusible 5 et la masse, de telle façon que la conduction du thyristor provoque un court-circuit et une coupure immédiate du fusible 5. Le rôle d'un tel circuit superviseur, en lui-même classique, est donc de protéger les mémoires contenant les compteurs d' affranchissement à l'encontre d'un mauvais fonctionnement du régulateur.

Certains superviseurs, tels que le *MC 3423* précité, disposent en outre d'une entrée auxiliaire 10 permettant de commander par application d'un signal logique la fusion du fusible. Cette entrée peut être avantageusement raccordée à une sortie 11, désignée CF ("commande fusible"), du microcontrôleur 2 de manière que ce dernier puisse interrompre de manière irréversible le fonctionnement de la machine en provoquant la fusion du fusible lorsqu'il constate un défaut majeur (par exemple du type "contenu mémoire incohérent") ou détecte une tentative de fraude. Bien entendu, le fusible 5 est disposé à l'intérieur de l'enceinte plombée, de sorte que son remplacement par l'utilisateur n'est pas autorisé.

Selon l'invention, on prévoit un organe détecteur de température 12 susceptible de détecter de façon "non réversible" l'exposition de la machine à une température excessivement basse et/ou haute et de délivrer un signal d'inhibition propre à interdire toute utilisation ultérieure de l'appareil (par "non réversible", on entendra un changement d'état qui ne peut être inversé que par une action extérieure à l'organe détecteur, par exemple le changement d'un composant électrique tel qu'un fusible, l'appui sur un bouton de réarmement placé dans l'enceinte protégée, ou l'application d'un signal électrique externe non commandable par l'utilisateur ; il s'agit donc d'une irréversibilité logique, susceptible d'être restaurée dans des conditions spécifiques, et non d'une irréversibilité physique, absolue).

L'organe détecteur 12 selon l'invention se présente essentiellement sous la forme d'un dipôle comportant deux bornes A et B dont l'une, A, délivre par exemple un signal logique "haut" permanent lorsque le seuil (bas et/ou haut) de température a été franchi une fois, fût-ce brièvement.

Ce signal logique, que l'on appellera "signal d'alerte", peut par exemple être appliqué à une entrée auxiliaire supplémentaire du circuit superviseur 7 ou, comme illustré, à l'entrée auxiliaire unique 10 par l'intermédiaire d'un comparateur 13 recevant le signal issu de l'organe de détection 12 et le signal CF provenant du microcontrôleur 11, ou bien encore, comme illustré en tiretés en 14, en connectant l'entrée A directement à l'une des entrées du microcontrôleur 2, l'état de cette entrée étant vérifiée par le microcontrôleur à chaque mise sous tension de la machine ou de façon périodique dans une boucle de supervision.

La figure 2 illustre une première forme de réalisation de l'organe 12 : celui-ci comporte essentiellement quatre composants montés en boucle, à savoir :
- une pile 15, par exemple une pile au lithium susceptible de débiter un courant de 10 mA à des températures pouvant aller jusqu'à -20 °C ;
- un contact thermostatique classique 16 à disque ou à lame bimétallique, présentant un contact ouvert lorsque la température est supérieure à + 3 °C; si la température descend, le contact se ferme lorsque la température atteint -10 °C (± 5°C) et s'ouvre à nouveau lorsque celle-ci remonte à 0 °C (± 3°C) ;
- un fusible calibré 17, caractérisé par son courant de fusion Iₙ, par exemple Iₙ = 2 mA, de tels fusibles calibrés étant par exemple disponibles auprès de la société *Littlefuse*, et
- une résistance 18 de limitation du courant, par exemple calculée pour limiter le courant à 5.Iₙ, soit 10 mA dans l'exemple choisi.

Le fonctionnement de ce circuit est le suivant :

Au dessus de 3 °C, donc à une température normale de fonctionnement ou de stockage de la machine, le contact 16 est ouvert, aucun courant ne circule dans la boucle, et la pile ne débite donc pas. Lorsque la température descend, et pour une valeur comprise entre - 5 °C et -15 °C (compte tenu de la marge de tolérance du contact thermostatique, qui est un composant courant, bon marché), le contact thermostatique 16 se ferme, un courant d'une intensité de 5.Iₙ circule dans la boucle et le fusible 17 fond en quelques millisecondes ; dès qu'il y a rupture du fusible, la pile cesse de débiter.

Ce circuit 12 constitue ainsi un détecteur irréversible de températures basses. Vu entre les points A et B (bornes 19 et 20), il se comporte donc comme un contact fermé lorsque la machine est restée à une température supérieure à -10°C (± 5°C) ; dans le cas contraire, le contact est ouvert, le passage à cet état ayant lieu de manière irréversible et commandant la neutralisation de la machine de la manière indiquée plus haut.

En variante, dans le cas où l'organe 12 est connecté à une entrée du microcontrôleur 2, ce dernier peut, au lieu d'agir sur le fusible principal, simplement interdire la réalisation des affranchissements, cette interdiction étant avantageusement accompagnée d'une alarme visuelle telle que l'allumage d'une diode luminescente ou l'affichage d'un message "température basse" sur un afficheur alphanumérique de la machine.

L'un des inconvénients du module de la figure 2 tient au fait que, lorsque la partie plombée de la machine est, par exemple, transportée par le service après-vente dans le coffre d'une voiture, la température peut descendre en-dessous du seuil de déclenchement du détecteur, ce qui provoque la rupture du fusible.

On va profiter du fait que la machine est généralement transportée déplombée, le plomb étant placé chez l'usager au moment de la mise en service ; dans ces conditions, pour éviter la rupture du fusible pendant le transport, on ajoute à l'organe 12 un interrupteur K en série avec le fusible, avec deux positions "service" (S) et "transport" (T), la position de l'interrupteur K étant connue du microcontrôleur par la borne A' reliée à ce dernier. En position "transport", le fusible est isolé de la pile et sa fusion est impossible. Si la machine est mise sous tension avec l'interrupteur en position "transport" alors le microcontrôleur voit le point A' relié à la masse et le point A en l'air. Dans ce cas, la machine affiche un message "Détecteur hors service" et elle interdit la réalisation de l'affranchissement. En position "service", le microcontrôleur constate que l'entrée A' est en l'air et que l'entrée A est à la masse à travers le fusible ; il autorise alors la réalisation des affranchissements.

En variante, on peut remplacer l'interrupteur K par trois bornes pouvant recevoir un cavalier amovible occupant la position T ou S. L'absence de cavalier correspond alors au test ; en effet, le microcontrôleur constate que A et A' sont en l'air et en déduit que le cavalier est en position S et que le fusible est coupé. La machine affiche alors "Défaut température".

Une autre variante encore pourrait consister à monter le fusible sur un support de manière à le rendre amovible, la machine étant transportée sans le fusible qui serait implanté sur son support au moment de la mise en service de la machine chez l'usager.

Il n'en reste pas moins que le module illustré figure 2 ne peut être déclenché qu'une fois, son réarmement nécessitant le changement du fusible 17.

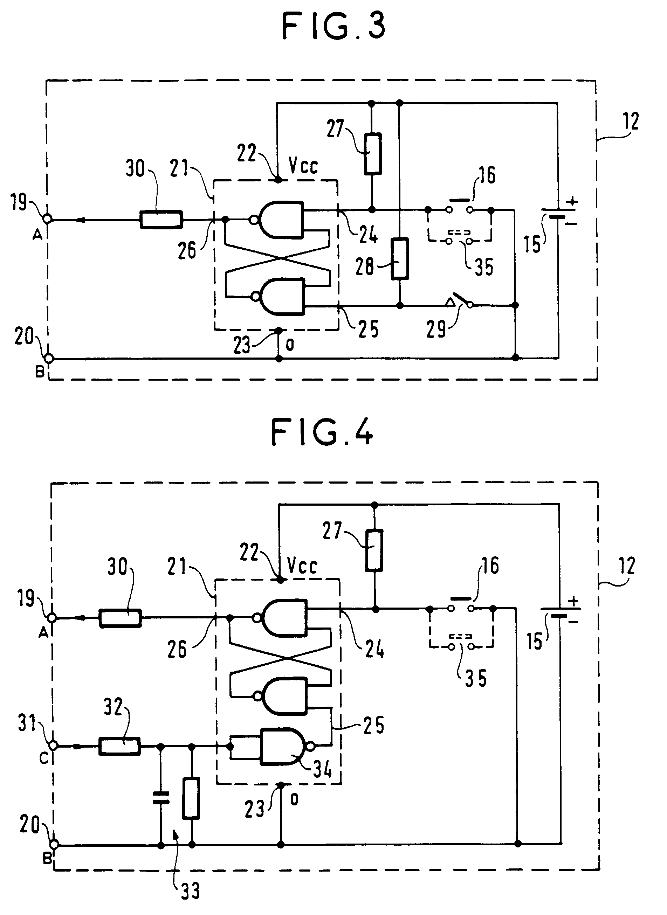

Pour éviter cet inconvénient, on peut, comme illustré figure 3, remplacer le fusible 17 par une bascule bistable électronique 21 de type RS, de très faible consommation. Cette bascule 21 comporte une entrée d'alimentation 22 reliée en permanence à la pile 15 (donc alimentée même si la machine est arrêtée ou débranchée), une entrée de mise à la masse 23, une entrée logique d'armement ("Set") 24, une entrée logique de réarmement ("Reset") 25 et une sortie logique 26. Les entrées 24 et 25 sont polarisées à la tension positive de la pile par les résistances 27 et 28, de sorte que la sortie 26 se trouve initialement au niveau logique bas. Le contact thermostatique 16 est monté entre l'entrée 24 et la masse de sorte que, lorsqu'il se ferme, il force le passage au niveau haut (tension de la pile 15) de la sortie 26 de la bascule, qui restera dans cet état jusqu'à ce que l'on appuie sur une touche de réarmement 29 montée entre l'entrée 25 et la masse, cette touche étant bien entendue placée à l'intérieur de l'enceinte plombée. ll suffit d'appliquer le signal de la sortie 26 à la borne A du circuit 12, via une résistance 30, pour disposer d'une fonctionnalité identique à celui du mode de réalisation de la figure 2, mais sans nécessiter le remplacement d'un composant pour la remise en service de l'appareil.

Pour ne pas utiliser une touche spécifique de réarmement, on peut dédier cette fonction au microcontrôleur 2, en modifiant le circuit de la manière illustrée figure 4. L'organe 12 comporte alors, en lieu et place de la résistance 28 et de la touche de réarmement 29, une borne supplémentaire 31 (entrée C) connectée à une sortie du microcontrôleur 2 (comme illustré en 14 sur la figure 1) et reliée à l'entrée de réarmement 25 de la bascule 21 via une résistance série 32, un circuit résistance-capacité 33 et une porte 34. Lorsque le microcontrôleur positionne l'entrée C au niveau haut pendant un temps suffisant, il force la sortie A à revenir au niveau bas, ce qui réarme la bascule (le temps pendant lequel la commande doit être appliquée sur l'entrée C dépendant de la constante de temps du circuit 33, destiné à filtrer d'éventuelles commandes intempestives délivrées par le microcontrôleur, en particulier au moment des mises hors tension ou sous tension de la machine).

Ceci permet d'incorporer le dispositif de l'invention à une machine ne possédant qu'une seule touche de réarmement, située dans l'enceinte plombée. Un dépassement du seuil bas de température interdit la réalisation des affranchissements de la manière indiquée plus haut, et le microcontrôleur signale cette interdiction. Pour débloquer la machine après constat de la tentative de fraude, il sera nécessaire de déplomber la machine et d'agir sur la touche. Le microcontrôleur commandera alors le réarmement de la bascule, et fera disparaître la signalisation du défaut "température basse" ; la touche sera alors disponible pour d'autres fonctions, en elles-mêmes connues.

En complément des modes de réalisation que l'on vient de décrire, il est possible de placer en parallèle sur le contact thermostatique 16 un second contact thermostatique 35 (figures 2, 3 et 4) qui se fermera lorsque la température dépassera un seuil haut de température, par exemple 70 °C. Le franchissement de ce seuil supérieur produira, comme dans le cas précédent, la fusion du fusible 17 ou bien le changement d'état de la bascule 21. Cette configuration permet en particulier d'omettre le fusible thermique de protection qui était placé en série avec le fusible principal dans les machines connues. On notera à cet égard que, si l'on utilise un circuit du type de celui des figures 3 et 4, on peut aboutir au même résultat avec possibilité de réarmement sans changement de composant, procurant ainsi un avantage supplémentaire par rapport aux systèmes antérieurs.

La mise en parallèle de deux contacts thermostatiques présente cependant l'inconvénient de ne pas pouvoir déterminer si le déclenchement provient d'une température excessivement haute ou excessivement basse. Si l'on souhaite pouvoir le faire, on peut utiliser deux circuits distincts, un par contact thermostatique. Les deux montages, qui peuvent être alimentés par la même pile, appliquent au microcontrôleur des signaux sur des entrées distinctes de celui-ci, le réarmement pouvant être commun.

L'un des inconvénients liés à l'utilisation d'une bascule électronique (figures 3 et 4) par rapport à un fusible (figure 2) tient au fait que la pile 15, qui va débiter constamment, va peu à peu s'user. Pour remédier à cet inconvénient, on peut tout d'abord utiliser pour la bascule des circuits intégrés tels que ceux de la famille *74HC,* qui fonctionnent jusqu'à 2 V (une pile neuve débitant une tension de l'ordre de 3 V, qui peut tomber à 2,5 V en fin de vie), avec des courants de repos très faibles. En second lieu, il peut être utile de surveiller la tension de la pile. À cet égard, l'avantage d'utiliser pour la bascule des circuits de la famille précitée est que la tension de leur sortie logique est égale à la tension d'alimentation du circuit, dès lors que le courant débité par cette sortie reste faible. Dans le cas présent, on peut considérer que la tension au point A, correspondant au niveau logique haut de la bascule, est égale à la tension de la pile 15. Pour connaître l'usure de la pile, il suffit donc de mesurer cette tension, ce qui peut être aisé si le microcontrôleur possède une entrée analogique appropriée : lorsqu'il mesurera sur cette entrée une tension supérieure à 2,5 V, il saura qu'il n'y a pas eu franchissement du seuil de température et que la pile n'est pas entièrement usée, à la condition de connecter sur cette entrée la sortie complémentaire de la bascule RS. La connaissance de la tension de la pile permet également au microcontrôleur de gérer des alarmes et des messages, par exemple prévenir l'utilisateur que la pile doit être changée, lorsque la tension descend au-dessous de 2,6 V.

Par ailleurs, dans les machines équipées d'un circuit horloge-calendrier, il est bien connu que ce circuit est secouru par une pile. Si l'on équipe cette machine d'un circuit selon l'invention, il est possible de supprimer la pile 15 du circuit 12 en connectant l'ensemble fusible 17, résistance 18 et contact thermostatique 16 aux bornes de la pile de l'horloge-calendrier. En fonctionnement dans la plage spécifiée de températures, cette ajout n'entraîne aucun débit supplémentaire pour la pile, comme on l'a noté plus haut. Dans le cas de l'utilisation d'une bascule 26 à la place du fusible, la pile de l'horloge-calendrier doit normalement pouvoir assurer la très faible consommation supplémentaire induite par la bascule.

On va maintenant décrire une seconde forme de réalisation de l'invention, applicable dans le cas où l'on souhaite régler le seuil de déclenchement et/ou garantir une tolérance étroite de la valeur du seuil sans pour autant recourir à des composants coûteux.

On peut ainsi souhaiter par exemple un réglage possible du seuil et/ou une tolérance de ± 2°C (à comparer au seuil fixé par construction de -10°C ± 15°C de l'exemple du premier mode de réalisation décrit plus haut).

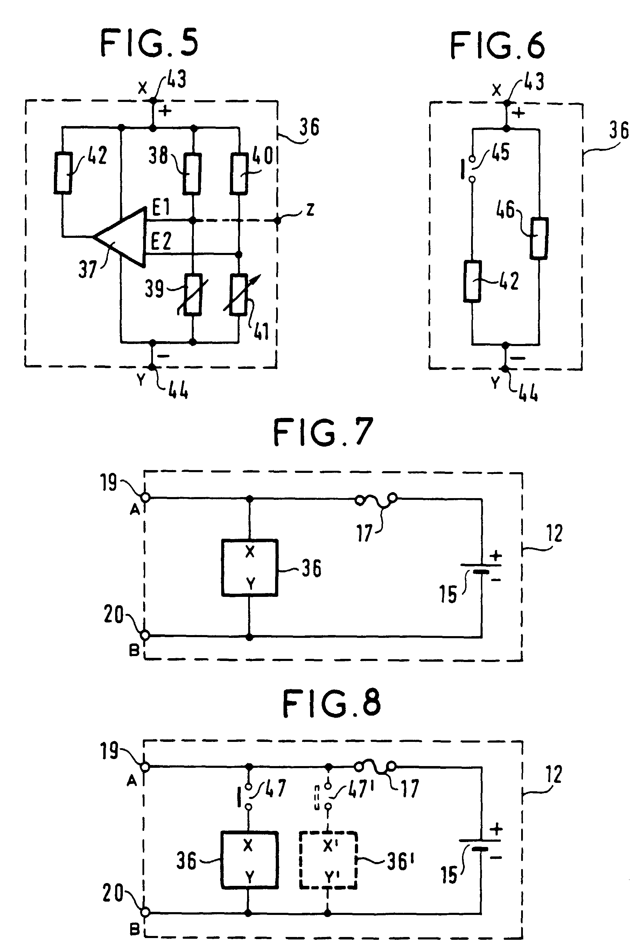

On remplace alors le thermocontact 16 des figures 2 à 4 par un montage électronique utilisant un composant sensible à la température, tel qu'une thermistance CTP ou CTN, par exemple de la série *KTY8* de Philips. Si l'on considère le schéma du circuit 36 de la figure 5, un comparateur 37 a l'une de ses entrées E₁ reliée au point milieu d'un diviseur de tension constitué d'une résistance fixe 38 et d'une thermistance 39 ; l'autre entrée E₂ est reliée au point milieu d'un pont diviseur constitué par une résistance fixe 40 et une résistance ajustable 41. La tension sur l'entrée E₁ va donc décroître lorsque la température augmente si la thermistance 39 est une CTN, et inversement pour une CTP. La résistance ajustable 41 permet, de manière connue, de régler le seuil de basculement du comparateur 37. Si la variation de tension sur l'entrée E₁ est insuffisante pour obtenir un réglage précis par la résistance 41, il suffit d'intercaler un étage amplificateur entre cette entrée E₁ et le point milieu du pont diviseur 38, 39. Lorsque le seuil réglé par la résistance 41 est franchi, un courant circule dans la résistance 42 reliée à la sortie du comparateur 37, de sorte que le comparateur se comporte, vis-à-vis de cette résistance 42, comme un interrupteur déclenché à une température réglée par la résistance 41.

Vu entre les bornes 43 et 44, ce dipôle XY se comporte donc à la manière du schéma équivalent de la figure 6. Tant que le seuil de température n'est pas atteint, le contact équivalent 45 est ouvert, la consommation du dipôle étant dans ce cas faible et égale au courant traversant la résistance 46, équivalente au réseau des résistances 38, 39, 40 et 41, qui représente une valeur élevée. Dès que le seuil de température est franchi, le contact équivalent 45 se ferme, ce qui induit une forte augmentation du courant consommé par le dipôle, la résistance 42 étant d'une valeur très inférieure à celle de la résistance équivalente 46.

Si, comme illustré figure 7, l'on associe à ce circuit 36 un fusible 17 et une pile 15, tant que le seuil de température n'est pas franchi, le contact du dipôle est ouvert et la pile débite un courant très faible, nettement inférieur au courant Iₙ nécessaire pour faire fondre le fusible ; dès que le seuil de température est atteint, la consommation du dipôle dépasse largement le courant Iₙ et le fusible fond. On retrouve bien les mêmes fonctionnalités que celles décrites à propos de la figure 2 pour un contact thermostatique, le seuil de température pouvant cette fois-ci être réglé de façon précise. Si la borne A du circuit de la figure 7 est relié à l'entrée analogique du microcontrôleur, celui-ci contrôle la tension fournie par la pile si le fusible est présent, et détecte une tension nulle dans le cas où le fusible est coupé.

Comme précédemment, on peut remplacer le fusible 17 par une bascule bistable. Dans ce cas, la sortie du comparateur commande directement l'entrée de la bascule. De même, il est possible de surveiller un seuil bas et un seuil haut en dédoublant le comparateur 37 et les résistances 40 et 41 dans le circuit 36, le pont diviseur 38, 39 pouvant en revanche rester commun aux deux comparateurs.

En outre, tout ce qui vient d'être dit concernant l'utilisation d'une thermistance peut également s'appliquer à un thermocouple, à la condition de prévoir un étage amplificateur entre l'entrée du comparateur et le thermocouple.

Pour augmenter la durée de vie de la pile, il est possible de ne mettre le dipôle sous tension que lorsque la température approche du seuil à surveiller.

Dans ce cas il suffit, comme illustré sur la figure 8, d'associer au dipôle un autre contact thermostatique, le dipôle 36 étant monté en série avec un contact thermostatique auxiliaire 47. Supposons ainsi que le dipôle soit réglé sur une température de déclenchement de - 6°C et que le contact thermostatique auxiliaire 47 se ferme pour des températures inférieures à 0 °C. Alors, pour la quasi-totalité des températures usuelles, par exemple des températures de l'ordre de 10 à 30 °C, le contact 47 reste ouvert, le dipôle 36 ne consomme pas et la pile 15 ne s'use pas. Dès que la température devient négative, le contact se ferme, le dipôle 36 est mis sous tension, la pile débite et la surveillance fine de la température commence. Si la température remonte, le contact 47 s'ouvre à nouveau et le dipôle se retrouve hors tension ; en revanche, si la température descend en dessous de - 6°C, le dipôle provoque la rupture du fusible 17.

Le même schéma peut être appliqué à la surveillance d'un seuil haut de température. Il suffit à cet effet de monter en parallèle sur l'ensemble série constitué du dipôle 36 et du contact 47 un autre ensemble série de même nature mais avec, par exemple, un contact auxiliaire 47' se fermant à partir de 65°C, associé à un dipôle 36' réglé sur un seuil de 70°C. Dans ce cas, on obtient un organe de surveillance fine de la plage spécifiée des températures admissibles de la machine, organe qui ne se met sous tension que lorsque la température avoisine les limites de cette plage.

Selon un autre aspect de la présente invention, il existe au autre domaine où la surveillance de la température interne de la machine est importante, qui est celui de la prévention des pannes ; il est en effet bien connu qu'un échauffement anormal d'une machine est l'indice d'une panne à venir.

On peut appliquer les enseignements de l'invention à une telle surveillance, celle-ci ayant dans ce cas lieu seulement pendant les périodes de fonctionnement de la machine et non plus, comme précédemment, de façon permanente (c'est-à-dire que la machine soit à l'arrêt ou en marche, sous tension ou non).

Par exemple, une machine spécifiée pour fonctionner à une température ambiante comprise entre 0 et 40 °C peut s'échauffer normalement de dix degrés lorsqu'elle fonctionne au maximum de ses caractéristiques de vitesse ou de puissance. Dans ce cas, il est intéressant de vérifier en permanence que la température interne de la machine n'excède pas 50 °C et, en cas de dépassement, de déclencher une alarme indiquant à l'usager de prévenir le service après-vente, de provoquer un arrêt temporaire de la machine pour permettre son refroidissement, ou encore de diminuer la cadence d'utilisation jusqu'au retour à la normale de la température.

Comme, dans ce cas, la machine est en fonctionnement, donc sous tension, et que le microcontrôleur dispose d'entrées analogiques, si l'on relie à l'une de ces entrées le point milieu d'un pont diviseur constitué d'une résistance et d'une thermistance (par exemple la tension prélevée au point Z du circuit de la figure 36 de la figure 5), on dispose alors d'un thermomètre d'une précision suffisante pour réaliser la fonction souhaitée. Cycliquement, par exemple toutes les minutes, le microcontrôleur convertit la tension issue du thermomètre et compare le résultat à un seuil préenregistré ; si le seuil est dépassé, il déclenchera l'alarme, l'arrêt temporaire ou la baisse de cadence comme mentionné précédemment.

Etant donné que les phénomènes thermiques sont des phénomènes à variation lente, il est possible de moduler la cadence des mesures de température. Par exemple, lorsque la température mesurée est éloignée du seuil, la mesure suivante pourra être effectuée plusieurs minutes après tandis que, si la température mesurée est proche du seuil, la mesure pourra être effectuée toutes les secondes par exemple. Une telle modulation de la cadence des mesures permet de ne pas pénaliser la charge de travail du microcontrôleur pendant le fonctionnement normal de la machine.

Le mode de mesure que l'on vient de décrire présente l'inconvénient de ne pas mesurer l'échauffement effectif de la machine mais simplement de vérifier qu'il n'y a pas de dépassement d'une température maximum. Ainsi, si la température ambiante est de 25 °C et que l'échauffement normal est de dix degrés, le seuil de surveillance devrait être placé à 35 °C au lieu des 50 °C de l'exemple précédent ; en revanche, dans le cas d'un échauffement anormal de vingt degrés, la température interne monterait à 45 °C, soit une température inférieure aux 50 °C du seuil préenregistré.

Pour remédier à cet inconvénient, on peut équiper la machine d'un second thermomètre chargé de mesurer la température de l'ambiance de la machine. Avantageusement, ce thermomètre d'ambiance est fixé sur une des parties métalliques de la machine se trouvant au contact avec l'air ambiant ou, à tout le moins, fixé sur une partie froide de la machine, c'est-à-dire dans une zone où l'échauffement par rapport à l'ambiance est minimal.

Le thermomètre d'ambiance est monté d'une façon identique au premier thermomètre, et il est raccordé à une autre entrée analogique du microcontrôleur. Ce dernier prélève périodiquement les deux températures, calcule la valeur différentielle correspondant à l'échauffement en soustrayant les deux températures, puis compare le résultat à l'échauffement autorisé préenregistré. Comme précédemment, en cas de dépassement, les alarmes et les mesures de sauvegarde sont déclenchées, protégeant ainsi la machine avant la survenance d'une panne.

## Revendications

1. Un dispositif pour détecter le franchissement d'un seuil prédéterminé de température par les circuits d'un appareil électronique sécurisé, notamment ceux d'une machine à affranchir, et interdire l'utilisation ultérieure de cet appareil après un tel franchissement, ce dispositif comportant, disposés à l'intérieur d'une enceinte protégée :
- un organe détecteur de température (12), propre à passer de manière non réversible, lors d'un franchissement dudit seuil prédéterminé, d'un premier état stable à un second état stable et délivrant un signal d'alerte lorsqu'il se trouve dans ce second état, et
- des moyens de commande, coopérant avec le détecteur pour délivrer, en réponse au signal d'alerte, un signal d'inhibition propre à interdire toute utilisation de l'appareil électronique,
caractérisé en ce que l'organe détecteur de température est un organe électrique comportant :
. une source de tension (15), délivrant une tension continue,
. un composant électrique ou électronique (17 ; 21) susceptible de prendre deux états correspondant auxdits premier et second états stables, et
. un interrupteur thermostatique (16 ; 36) fermant, pour des valeurs de températures situées au-delà dudit seuil prédéterminé, un circuit comprenant la source de tension et le composant électrique ou électronique de manière que le passage d'un courant dans l'interrupteur thermostatique provoque une transition du premier au second état du composant électrique ou électronique.

2. Le dispositif de la revendication 1, caractérisé en ce que l'organe détecteur de température est un détecteur de températures basses, l'interrupteur thermostatique fermant le circuit pour des valeurs de températures inférieures audit seuil.

3. Le dispositif de la revendication 1, caractérisé en ce que le composant électrique ou électronique est un fusible (17) monté dans une maille de courant comprenant également la source de tension et l'interrupteur thermostatique.

4. Le dispositif de la revendication 3, caractérisé en ce que le signal d'alerte est donné par la tension prélevée au point commun (A) du fusible (17) et de l'interrupteur thermostatique (16 ; 35).

5. Le dispositif de la revendication 1, caractérisé en ce que le composant électrique ou électronique est un bistable RS (21) dont l'entrée de déclenchement (24) est reliée à l'interrupteur thermostatique (16 ; 35).

6. Le dispositif de la revendication 1, caractérisé en ce que le signal d'inhibition délivré par les moyens de commande est appliqué à une entrée d'un microcontrôleur (2) de pilotage de l'appareil électronique et en ce que ce microcontrôleur se place, en présence du signal d'inhibition, dans un mode interdisant toute utilisation de l'appareil électronique.

7. Le dispositif de la revendication 6, caractérisé en ce que le signal d'inhibition, lorsqu'il est délivré, possède un niveau variable représentatif de la tension délivrée par la source de tension de l'organe détecteur de température, en ce que ce signal est appliqué sur une entrée analogique du microcontrôleur (2) et en ce que ce dernier, en cas de tension inférieure à une valeur limite donnée, délivre un message d'avertissement de changement de pile et/ou se place dans un mode interdisant toute utilisation de l'appareil électronique.

8. Le dispositif de la revendication 1, caractérisé en ce que le signal d'inhibition délivré par les moyens de commande est appliqué à une entrée d'un circuit superviseur (7) du circuit d'alimentation (4, 5, 6, 8) de l'appareil électronique et en ce que ce circuit superviseur, en présence du signal d'inhibition, met hors service l'alimentation de l'appareil électronique.

9. Le dispositif de la revendication 1, pour détecter le franchissement par l'appareil aussi bien d'un seuil inférieur de température que d'un seuil supérieur de température afin de signaler toute excursion de température hors des limites d'une plage de températures admissibles, caractérisé en ce qu'il est prévu un organe détecteur de température commun délivrant un signal d'alerte commun, cet organe détecteur de température comportant deux interrupteurs thermostatiques (16, 35) montés en parallèle, l'un fermant le circuit pour des valeurs de températures inférieures audit seuil inférieur et l'autre fermant le circuit pour des valeurs de températures supérieures audit seuil supérieur.

10. Le dispositif de la revendication 1, pour détecter le franchissement par l'appareil aussi bien d'un seuil inférieur de température que d'un seuil supérieur de température afin de signaler toute excursion de température hors des limites d'une plage de températures admissibles, caractérisé en ce qu'il est prévu deux organes détecteurs de température distincts, réglés sur chacun des seuils respectifs et délivrant deux signaux d'alerte distincts correspondants.

11. Le dispositif de la revendication 1, caractérisé en ce que l'interrupteur thermostatique est un thermocontact bimétallique (16).

12. Le dispositif de la revendication 1, caractérisé en ce que l'interrupteur thermostatique est un circuit électronique (35) commandé par thermistance (39) ou thermocouple.

13. Le dispositif de la revendication 12, caractérisé en ce qu'il est prévu un interrupteur thermostatique auxiliaire (47) non électronique se fermant à une température voisine dudit seuil prédéterminé mais située en-deçà de celui-ci, monté en série avec ledit circuit électronique (35) commandé par thermistance ou thermocouple pour n'alimenter celui-ci que lorsque la température approche ledit seuil prédéterminé.

14. Le dispositif de la revendication 12, notamment pour la prévention d'échauffements excessifs de l'appareil électronique en cours d'utilisation de celui-ci, caractérisé en ce que ledit circuit électronique commandé par thermistance ou thermocouple délivre également un signal représentatif de la température opérationnelle de l'appareil électronique, en ce que ce signal est appliqué à une entrée analogique d'un microcontrôleur (2) de pilotage de l'appareil électronique et en ce que ce dernier, en cas de température opérationnelle supérieure à une température de référence, délivre un message d'avertissement et/ou se place dans un mode interdisant temporairement toute utilisation de l'appareil électronique.

15. Le dispositif de la revendication 14, dans lequel ladite température de référence est un paramètre variable, fonction de la température de l'environnement de l'appareil électronique, de manière à ne commander le microcontrôleur (2) que lorsque l'écart différentiel entre température de l'environnement et température opérationnelle dépasse une valeur limite prédéterminée.

## Patentansprüche

1. Vorrichtung zur Erfassung der Überschreitung einer vorbestimmten Temperaturschwelle durch die Schaltungen eines gesicherten elektronischen Geräts, insbesondere einer Frankiermaschine, und zur Blockierung des weiteren Betriebs dieses Geräts nach einer solchen Überschreitung, wobei die Vorrichtung innerhalb eines geschützten Gehäuses aufweist:
- ein Temperaturerfassungsorgan (12), das auf irreversible Weise beim Überschreiten der vorbestimmten Schwelle von einem ersten in einen zweiten stabilen Zustand übergeht und ein Warnsignal liefert, wenn es sich im zweiten Zustand befindet,
- und Steuermittel, die mit dem Organ zusammenwirken und als Antwort auf das Warnsignal ein Blockiersignal liefern, mit dem jede weitere Benutzung des elektronischen Geräts verhindert wird,
dadurch gekennzeichnet, daß das Temperaturerfassungsorgan ein elektrisches Organ ist, das aufweist:
. eine Spannungsquelle (15) für eine Gleichspannung,
. ein elektrisches oder elektronisches Bauelement (17; 21), das zwei Zustände entsprechend dem ersten und zweiten stabilen Zustand einnehmen kann,
. und einen Thermostatunterbrecher (16; 36), der für Temperaturwerte jenseits der vorbestimmten Schwelle einen Schaltkreis mit der Spannungsquelle und dem elektrischen oder elektronischen Bauelement schließt, sodaß ein Strom durch den Thermostatunterbrecher einen Übergang des elektrischen oder elektronischen Bauelements vom ersten in den zweiten Zustand hervorruft.

2. Vorrichtung nach Anspruch 1, dadurch gekennzeichnet, daß das Temperaturerfassungsorgan ein Detektor für niedrige Temperaturen ist und daß der Thermostatunterbrecher den Schaltkreis für Temperaturwerte unterhalb der Schwelle schließt.

3. Vorrichtung nach Anspruch 1, dadurch gekennzeichnet, daß das elektrische oder elektronische Bauelement eine Schmelzsicherung (17) ist, die in einem Stromkreis enthalten ist, der außerdem die Spannungsquelle und den Thermostatunterbrecher aufweist.

4. Vorrichtung nach Anspruch 3, dadurch gekennzeichnet, daß das Warnsignal durch die Spannung gegeben wird, die am gemeinsamen Punkt (A) der Schmelzsicherung (17) und des Thermostatunterbrechers (16; 35) abgenommen wird.

5. Vorrichtung nach Anspruch 1, dadurch gekennzeichnet, daß das elektrische oder elektronische Bauelement eine RS-Kippstufe (21) ist, deren Setzeingang (24) an den Thermostatunterbrecher (16; 35) angeschlossen ist.

6. Vorrichtung nach Anspruch 1, dadurch gekennzeichnet, daß das Blockiersignal, das von den Steuermitteln geliefert wird, an einen Eingang eines Mikrokontrollorgans (2) zur Steuerung des elektronischen Geräts gelangt und daß dieses Mikrokontrollorgan bei Vorliegen des Blockiersignals in einen Modus übergeht, in dem jede Nutzung des elektronischen Geräts unmöglich wird.

7. Vorrichtung nach Anspruch 6, dadurch gekennzeichnet, daß das Blockiersignal, wenn es vorliegt, einen variablen Pegel besitzt, der für die von der Spannungsquelle des Temperaturerfassungsorgans gelieferte Spannung repräsentativ ist, daß dieses Signal an einen Analogeingang des Mikrokontrollorgans (2) angelegt wird und daß dieses Organ im Fall einer Spannung unterhalb eines gegebenen Grenzwerts eine Warnmeldung für den Batteriewechsel ausgibt und/oder sich in einen Zustand bringt, der jede weitere Nutzung des elektronischen Geräts unmöglich macht.

8. Vorrichtung nach Anspruch 1, dadurch gekennzeichnet, daß das Blockiersignal, das von den Steuermitteln geliefert wird, an einen Eingang einer Überwachungsschaltung (7) der Stromversorgungsschaltung (4, 5, 6, 8) des elektronischen Geräts gelangt und daß diese Überwachungsschaltung bei vorliegendem Blockiersignal die Stromversorgung des elektronischen Geräts außer Betrieb setzt.

9. Vorrichtung nach Anspruch 1 zur Erfassung sowohl einer Unterschreitung einer unteren Temperaturschwelle als auch einer Überschreitung einer oberen Temperaturschwelle durch das Gerät, um jede Temperatur außerhalb des zulässigen Temperaturbereichs anzuzeigen, dadurch gekennzeichnet, daß ein gemeinsames Temperaturerfassungsorgan vorgesehen ist, das ein gemeinsames Warnsignal liefert und zwei Thermostatunterbrecher (16, 35) in Parallelschaltung besitzt, von denen der eine den Schaltkreis für Temperaturwerte unterhalb der unteren Schwelle und der andere für Temperaturwerte oberhalb der oberen Schwelle schließt.

10. Vorrichtung nach Anspruch 1 zur Erfassung sowohl einer Unterschreitung einer unteren Temperaturschwelle als auch einer Überschreitung einer oberen Temperaturschwelle durch das Gerät, um jede Temperatur außerhalb des zulässigen Temperaturbereichs anzuzeigen, dadurch gekennzeichnet, daß zwei getrennte Temperaturerfassungsorgane vorgesehen sind, die je auf ihre Schwellwerte eingestellt sind und zwei getrennte entsprechende Warnsignale liefern.

11. Vorrichtung nach Anspruch 1, dadurch gekennzeichnet, daß der Thermostatunterbrecher ein Bimetall-Thermokontakt (16) ist.

12. Vorrichtung nach Anspruch 1, dadurch gekennzeichnet, daß der Thermostatunterbrecher eine elektronische Schaltung (35) ist, die von einem Thermistor (39) oder einem Thermoelement gesteuert wird.

13. Vorrichtung nach Anspruch 12, dadurch gekennzeichnet, daß ein nichtelektronischer Hilfsthermostatunterbrecher (47) vorgesehen ist, der bei einer Temperatur in der Nähe der vorbestimmten Temperaturschwelle, aber diesseits dieser Schwelle schließt und in Reihe mit der elektronischen Schaltung (35) montiert ist, die vom Thermistor oder dem Thermoelement gesteuert wird, um diese Schaltung nur dann mit Strom zu versorgen, wenn die Temperatur sich der vorgegebenen Schwelle annähert.

14. Vorrichtung nach Anspruch 12, insbesondere zur Prävention von abnormen Erwärmungen des elektronischen Geräts während des Betriebs, dadurch gekennzeichnet, daß die elektronische Schaltung, die vom Thermistor oder dem Thermoelement gesteuert wird, außerdem ein Signal liefert, das für die Betriebstemperatur des elektronischen Geräts repräsentativ ist, daß dieses Signal an einen analogen Eingang eines Mikrokontrollorgans (2) zur Steuerung des elektronischen Geräts angelegt wird und daß dieses Gerät im Fall einer über eine Bezugstemperatur ansteigenden Betriebstemperatur eine Warnmeldung liefert und/oder in einen Modus übergeht, in dem vorübergehend die Nutzung des elektronischen Geräts ganz verhindert wird.

15. Vorrichtung nach Anspruch 14, in der die Bezugstemperatur ein variabler Parameter ist, der von der Umgebungstemperatur des elektronischen Geräts abhängt, sodaß das Mikrokontrollorgan (2) nur dann gesteuert wird, wenn der Abstand zwischen der Umgebungstemperatur und der Betriebstemperatur einen vorgegebenen Grenzwert übersteigt.

## Claims

1. Apparatus for detecting the fact that a predetermined temperature threshold has been crossed by the circuits of a secure electronic appliance, in particular those of a postage meter or "franking machine", and for preventing any subsequent use of the appliance after such crossing has occurred, the apparatus including the following disposed inside a protected enclosure:
a temperature detector member (12) capable of changing non-reversibly from a first stable state to a second stable state when said predetermined threshold is crossed, and of delivering an alarm signal when it finds itself in the second state; and
control means co-operating with the detector to respond to the alarm signal by delivering a disable signal suitable for preventing any use of the electronic appliance;
said apparatus being characterized in that the temperature detector member is an electrical member including:
a voltage source (15) delivering a DC voltage;
an electrical or electronic component (17; 21) capable of taking two states corresponding to said first and second stable states; and
a thermostatic switch (16; 36) which, at temperatures situated beyond said predetermined threshold, closes a circuit including the voltage source and the electrical or electronic component so that a current passing through the thermostatic switch causes the electrical or electronic component to go from the first state to the second state.

2. Apparatus according to claim 1, characterized in that the temperature detector is a low-temperature detector, the thermostatic switch closing the circuit at temperatures lower than said threshold.

3. Apparatus according to claim 1, characterized in that the electrical or electronic component is a fuse (17) connected in a current mesh also including the voltage source and the thermostatic switch.

4. Apparatus according to claim 3, characterized in that the alarm signal is given by the voltage taken at a point (A) that is common to the fuse (17) and to the thermostatic switch (16; 35).

5. Apparatus according to claim 1, characterized in that the electrical or electronic component is an RS bistable (21) having its triggering input (24) connected to the thermostatic switch (16; 35).

6. Apparatus according to claim 1, characterized in that the disable signal delivered by the control means is applied to an input of a microcontroller (2) for controlling the electronic appliance, and in that, in the presence of the disable signal, the microcontroller switches to a mode preventing any use of the electronic appliance.

7. Apparatus according to claim 6, characterized in that, when the disable signal is delivered it has a variable level representing the voltage delivered by the voltage source of the temperature detector member, in that the signal is applied to an analog input of the microcontroller (2), and in that, in the event that the voltage is less than a given limit value, the microcontroller delivers a warning message indicating that the battery should be changed and/or switches to a mode preventing any use of the electronic appliance.

8. Apparatus according to claim 1, characterized in that the disable signal delivered by the control means is applied to an input of a supervisor circuit (7) for supervising the power supply circuit (4, 5, 6, 8) of the electronic appliance, and in that, in the presence of the disable signal, the supervisor circuit takes the power supply of the electronic appliance out of service.

9. Apparatus according to claim 1, for detecting both when the appliance crosses a low temperature threshold, and also when the appliance crosses a high temperature threshold, so as to report any occasion on which the temperature crosses the limits of a rated temperature range, said apparatus being characterized in that a common temperature detector is provided that delivers a common warning signal, the temperature detector member including two thermostatic switches (16, 35) connected in parallel, one of which closes the circuit for temperatures lower than said low threshold, the other switch closing the circuit for temperatures higher than said high threshold.

10. Apparatus according to claim 1, for detecting both when the appliance crosses a low temperature threshold and also when the appliance crosses a high temperature threshold, so as to report any occasion on which the temperature crosses the limits of a rated temperature range, said apparatus being characterized in that two distinct temperature detector members are provided, each detector member being set to a respective one of the thresholds and delivering a corresponding distinct alarm signal.

11. Apparatus according to claim 1, characterized in that the thermostatic switch is a bimetal thermocontact (16).

12. Apparatus according to claim 1, characterized in that the thermostatic switch is an electronic circuit (35) controlled by a thermistor (39) or by a thermocouple.

13. Apparatus according to claim 12, characterized in that a non-electronic auxiliary switch (47) is provided that closes at a temperature in the vicinity of said predetermined threshold but without crossing said threshold, the auxiliary switch being connected in series with said electronic circuit (35) controlled by a thermistor or by a thermocouple, so that said circuit is powered only when the temperature approaches said predetermined threshold.

14. Apparatus according to claim 12, in particular for preventing the electronic appliance from overheating while it is in use, said apparatus being characterized in that said electronic circuit controlled by a thermistor or by a thermocouple also delivers a signal representing the operating temperature of the electronic appliance, in that this signal is applied to an analog input of a microcontroller (2) for controlling the electronic appliance, and in that, in the event that the operating temperature becomes higher than a reference temperature, the microcontroller delivers a warning message and/or switches to a mode temporarily preventing any use of the electronic appliance.

15. Apparatus according to claim 14, in which apparatus said reference temperature is a parameter that varies as a function of the temperature of the environment of the electronic appliance, so as to control the microcontroller (2) only when the difference between the temperature of the environment and the operational temperature exceeds a predetermined limit value.
